(19) Europäisches Patentamt
European Patent Office
Office européen des brevets

(11) Publication number: 0 045 413
A1

(12) **EUROPEAN PATENT APPLICATION**

(21) Application number: 81105581.3

(22) Date of filing: 16.07.81

(51) Int. Cl.[3]: C 08 G 18/32
C 08 G 18/66, C 08 K 5/52
C 08 K 5/02

(30) Priority: 31.07.80 US 174043

(43) Date of publication of application:
10.02.82 Bulletin 82/6

(84) Designated Contracting States:
AT BE DE FR GB IT NL

(71) Applicant: BASF WYANDOTTE CORPORATION
1609 Biddle Avenue
Wyandotte Michigan 48192(US)

(72) Inventor: Otten, Jay Gregory
24781 Blanche Flat Rock
Michigan 48134(US)

(72) Inventor: McBrayer, Robert Lewis
952 Old Goddard
Lincoln Park Michigan 48146(US)

(74) Representative: von Günner, Kurt, Dr. et al,
BASF Aktiengesellschaft Carl-Bosch-Strasse 38
D-6700 Ludwigshafen(DE)

(54) **Flexible polyurethane foam compositions and methods for the preparation.**

(57) The present invention is directed to flexible polyurethane foam compositions and methods of preparation thereof, characterized by improved heat degradation properties, which are prepared by the reaction of an organic polyisocyanate with a polyol in the presence of a small but effective amount of a lower alkanediol. It is preferred that the alkanediol have from 2 to about 5 carbon atoms. Lower alkanediols that may be employed include 1,2-ethanediol (ethylene glycol), the propanediols, the butanediols, most preferably, 1,4-butanediol, and the pentanediols. By incorporating the alkanediol, improved resistance to heat degradation is achieved. Further, it has been discovered in accordance with the present invention that, with the incorporation of the alkanediol, the addition of conventional flame retardants does not increase foam degradation but, in fact, the combination improves resistance to heat degradation.

EP 0 045 413 A1

# FLEXIBLE POLYURETHANE FOAM COMPOSITIONS AND METHODS FOR THE PREPARATION

The present invention pertains to flexible polyurethane foam compositions and methods for the preparation thereof. More particularly, the present invention relates to preparation of flexible polyurethane foam compositions characterized by decreased degradation at high temperatures.

The preparation of flexible polyurethane foam compositions containing lower alkane diols is well known as evidenced by the following prior art.

Copending U.S. Patent Application Serial No. 972,641, discloses polyurethane foams which include about 0.2 to about 40 percent by weight, based on the polyol, of a chain extender comprising from about 1 percent to about 80 percent by weight of phenyldiethanolamine and from about 20 percent to about 99 percent by weight of 1,4-butanediol. The phenyldiethanolamine is set forth in the patent as an essential component of the patented composition. While this application discloses that use of 1,4-butanediol in polyurethane foam is known in the prior art, it is disclosed as a chain extender in chain extending quantities. More specifically, in Control Examples 1 and 3, the amount of 1,4-butanediol was 10.68 percent and 10.92 percent, respectively.

U.S. 3,929,730 discloses a process for preparing polyurethane compositions which comprises simultaneously reacting the usual components along with a mixture of polyfunctional chain extenders made up of butanediol and a sufficient amount of at least one other chain extender. The latter is an essential component of the composition.

U.S. 3,993,576 discloses mixtures of high molecular weight polyols and low molecular weight polyols which are solubilized and rendered resistant to phase separation upon storage by the addition of an effective quantity of a derivative of butylene glycol which is 1,4-butanediol.

U.S. 3,050,477 discloses, in the manufacture of polyether urethane foams by a one-shot process, the use of a diol modifier in addition to an organic silane monomer to improve the foaming action. This diol may be 1,4-butanediol. The organic silane monomer is an essential component of the composition of this patent.

One of the problems with flexible polyurethane foams is the degradation of such foams at high temperatures, i.e., 400°F or higher. Further, according to prior art practice, the incorporation of a conventional additive-type flame retardant often catalyzes foam degradation. This has been particularly true for possible carpet underlay applications in the automotive industry. Because of the current need to reduce weight in automobiles, it has been desirable to replace conventional automobile carpet underlay with polyurethane foams. However, the catalytic converter presents a problem since the portions of the floor in the passenger

compartment above the converter can reach temperatures of 204°C and higher, which can cause severe degradation of the polyurethane foam. The prior art, including the above-described patents and application, not only fail to teach a solution to the problem of heat degradation in flexible polyurethane foams particularly for use as automotive carpet underlay, but in fact fail completely to even deal with the problem.

Accordingly, it is a purpose of the instant invention to provide flexible polyurethane foam compositions which are characterized by resistance to heat degradation and methods for the preparation thereof.

The present invention is directed to flexible polyurethane foam compositions and methods of preparation thereof, characterized by improved heat degradation properties, which are prepared by the reaction of an organic polyisocyanate with an organic polyol in the presence of a small but effective amount of a lower alkanediol. It is preferred that the lower alkanediol have from 2 to about 5 carbon atoms. Lower alkanediols that may be employed include 1,2-ethanediol (ethylene glycol), the propanediols, the butanediols, most preferably, 1,4-butanediol, and the pentanediols. By incorporating the alkanediol, improved resistance to heat degradation is achieved. Further, it has been

discovered in accordance with the present invention that, with the incorporation of the lower alkanediol, the addition of conventional flame retardants does not increase foam degradation but, in fact, the combination improves resistance to heat degradation.

It has unexpectedly been found, in the preparation of flexible polyurethane foam products from polyols and polyisocyanates in the presence of a foaming agent, that incorporaton of a small but effective amount of a lower alkanediol, preferably in an amount of about 0.5 to 5 percent by weight of the polyol will impart improved resistance to heat degradation.

The polyols which may be employed in the subject invention will generally have an equivalent weight of from about 500 to 2000 and a functionality of from 2 to 4. Suitable compounds include hydroxyl-terminated polyesters, polyoxyalkylenepolyether polyols, and alkylene oxide adducts of organic compounds having at least 2 reactive hydrogen atoms such as amines, acids of phosphorus, dithiols, etc.

Any suitable hydroxyl-terminated polyester may be used such as are obtained, for example, from polycarboxylic acids and polyhydric alcohols. Any suitable polycarboxylic acid may be used such as oxalic acid, malonic acid, succinic acid, glutaric acid, adipic acid, pimelic acid, suberic acid,

azelaic acid, sebacic acid, brassylic acid, thapsic acid, maleic acid, fumaric acid, glutaconic acid, alpha-hydromuconic acid, beta-butyl-alpha-ethyl-glutaric acid, alpha,beta-diethylsuccinic acid, phthalic acid, isophthalic acid, terephthalic acid, hemimellitic acid, and 1,4-cyclohexanedicarboxylic acid. Any suitable polyhydric alcohol, including both aliphatic and aromatic, may be used such as ethylene glycol, 1,3-propanediol, 1,2-propylene glycol, 1,4-butanediol, 1,3-butanediol, 1,2-butylene glycol, 1,5-pentanediol, 1,4-pentanediol, 1,3-pentanediol, 1,6-hexanediol, 1,7-heptanediol, 2-butene-1,4-diol glycerol, 1,1,1-trimethylolpropane, 1,1,1-trimethylolethane, hexane-1,2,6-triol, alpha-methyl glucoside, pentaerythritol, and sorbitol. Also included within the term "polyhydric alcohol" are compounds derived from phenolic compounds such as 2,2-bis(4-hydroxyphenyl)propane, commonly known as Bisphenol A, and hydroxyalkyl ethers of such phenolic compounds such as bis-2-hydroxyethyl ether of hydroxyquinone.

The hydroxy-terminated polyester may also be a polyester amide such as is obtained by including some amine or amino alcohol in the reactants for the preparation of the polyesters. Thus, polyester amides may be obtained by condensing an amino alcohol such as ethanolamine with the polycarboxylic acids set forth above, or they may be made using the same components that make up the hydroxy-terminated polyester with only a portion of the components being a

diamine such as ethylenediamine. The hydroxy-terminated polyester may also be a hydroxy-terminated polycaprolactone polyol.

Any suitable polyoxyalkylene ether polyol may be used such as the polymerization product of an alkylene oxide or of an alkylene oxide with a polyhydric alcohol. Any suitable polyhydric alcohol may be used such as those disclosed above for use in the preparation of the hydroxy-terminated polyesters. Any suitable alkylene oxide may be used such as ethylene oxide, propylene oxide, butylene oxide, amylene oxide, and heteric or block copolymers of these oxides. The polyoxyalkylene polyether polyols may be prepared from other starting materials such as tetrahydrofuran and alkylene oxide-tetrahydrofuran copolymers; epihalohydrins such as epichlorohydrin; as well as aralkylene oxides such as styrene oxide. The polyalkylene polyether polyols may have either primary or secondary hydroxyl groups and, preferably, are polyethers prepared from alkylene oxides having from two to six carbon atoms such as polyethylene ether glycols, polypropylene ether glycols, and polybutylene ether glycols. The polyalkylene polyether polyols may be prepared by any known process such as, for example, the process disclosed by Wurtz in 1859 and Encyclopedia of Chemical Technology, Vol. 7, pp. 257-262, published by Interscience Publishers, Inc. (1951) or in U.S. Patent No. 1,922,459. Alkylene oxide adducts of Mannich condensation products are also useful in the invention.

Alkylene oxide adducts of acids of phosphorus which may be used include those neutral adducts prepared from the

alkylene oxides disclosed above for use in the preparation of polyalkylene polyether polyols. Acids of phosphorus which may be used are acids having a $P_2O_5$ equivalency of from about 72 percent to about 95 percent. The phosphoric acids are preferred.

Any suitable hydroxy-terminated polyacetal may be used such as, for example, the reaction product of formaldehyde or other suitable aldehyde with a dihydric alcohol or an alkylene oxide such as those disclosed above.

Any suitable aliphatic thiol including alkane thiols containing at least two -SH groups may be used such as 1,2-ethanedithiol, 1,2-propanedithiol, 1,3-propanedithiol, and 1,6-hexanedithiol; alkenethiols such as 2-butene-1,4-dithiol, and alkynethiols such as 3-hexyne-1,6-dithiol.

Any suitable polyamine may be used including aromatic polyamines such as methylene dianiline, polyarylpolyalkylene polyamine (crude methylene dianiline), p-aminoaniline, 1,5-diaminonaphthalene, and 2,4-diaminotoluene; aliphatic polyamines such as ethylene diamine, 1,3-propylenediamine; 1,4-butylenediamine, and 1,3-butylenediamine, as well as substituted secondary derivatives thereof.

In addition to the above hydroxy-containing compounds, other compounds which may be employed include graft polyols. These polyols are prepared by the in situ polymerization of the product of a vinyl monomer or monomers in a

reactive polyol medium and in the presence of a free radical initiator. The reaction is generally carried out at a temperature ranging from about 40°C to 150°C. The reactive polyol medium generally has an equivalent weight of at least about 500 and a hydroxyl number ranging from about 30 to about 600. The graft polyol has an equivalent weight of at least about 500 and a viscosity of less than 40,000 cps. at 10 percent polymer concentration.

A more comprehensive discussion of the graft polyols and their method of preparation can be found in U.S. Patent Nos. 3,383,351; 3,304,273; 3,652,639; and 3,823,201, the disclosures of which are hereby incorporated by reference.

Also, polyols containing ester groups can be employed in the subject invention. These polyols are prepared by the reaction of an alkylene oxide with an organic dicarboxylic acid anhydride and a compound containing a reactive hydrogen atom. A more comprehensive discussion of these polyols and their method of preparation can be found in U.S. Patent Nos. 3,585,185; 3,639,541; and 3,639,542.

In preparing the polyurethane foams of the subject invention, any suitable organic polyisocyanate or mixture thereof can be employed. Representative organic polyisocyanates correspond to the following formula:

$$R(NCO)_z$$

wherein R is a polyvalent organic radical which is either

aliphatic, aralkyl, aromatic or mixtures thereof, and z is an integer which corresponds to the valence of R and is at least two. Representative of the organic polyisocyanates contemplated herein includes, for example, the aromatic diisocyanates such as 2,4-toluene diisocyanate, 2,6-toluene diisocyanate, mixtures of 2,4- and 2,6-toluene diisocyanate, crude toluene diisocyanate, methylene diphenyl diisocyanate, crude methylene diphenyl diisocyanate and the like; the aromatic triisocyanates such as 4,4',4"-tri-phenylmethane triisocyanate, 2,4,6-toluene triisocyanates; the aromatic tetraisocyanates such as 4,4'-dimethyldiphenylmethane-2,2'-5,5'-tetraisocyanate, and the like; arylalkyl polyisocyanates such as xylylene diisocyanate; aliphatic polyisocyanates such as hexamethylene-1,6-diisocyanate, lysine diisocyanate methylester and the like; and mixtures thereof. Other organic polyisocyanates include polymethylene polyphenylisocyanate, hydrogenated methylene diphenylisocyanate, m-phenylene diisocyanate, naphthylene-1,5-diisocyanate, 1-methoxyphenylene-2,4-diisocyanate, 4,4'-biphenylene diisocyanate, 3,3'-dimethoxy-4,4'-biphenyl diisocyanate, 3,3'-dimethyl-4,4'-biphenyl diisocyanate, and 3,3'-dimethyldiphenylmethane-4,4'-diisocyanate. These polyisocyanates are prepared by conventional methods known in the art such as the phosgenation of the corresponding organic amine. Included within the useable isocyanates are the modifications of the above isocyanates which contain carbodiimide, allophanate or isocyanurate structures. Quasi-prepolymers may

also be employed in the process of the subject invention. These quasi-prepolymers are prepared by reacting an excess of organic polyisocyanate or mixtures thereof with a minor amount of an active hydrogen-containing compound as determined by the well-known Zerewitinoff test, as described by Kohler in Journal of the American Chemical Society, 49, 3181 (1927). These compounds and their methods of preparation are well known in the art. The use of any one specific active hydrogen compound is not critical hereto, rather any such compound can be employed herein. Generally, the quasi-prepolymers have a free isocyanate content of from 20 percent to 40 percent by weight.

Crude polyisocyanate may also be used in the compositions of the present invention, such as crude toluene diisocyanate obtained by the phosgenation of a mixture of toluene diamines or crude polymethylene polyphenylene polyisocyanate obtained by the phosgenation of crude polymethylene polyphenylene polyamine.

The amount of organic polyisocyanate that is employed should generally be sufficient to provide about 0.9 to 1.3 isocyanate groups per hydroxyl plus amine group, if any.

Conventional flame retardants can also be incorporated, preferably in amount of not more than about 20

percent by weight of the reactants. Suitable flame retardants are DFR-121 and DFR-100 fire retardants sold by Arapahoe Chemicals Co., ferrocene, ammonium bromide, tetrabromo bisphenol-A, bromine, bromine chloride, decabromodiphenyloxide, pentabromochlorocyclohexane, dibromoneopentyl glycol, FR-1450 fire retardant sold by Dow Chemical Co., vinyl bromide, polyvinyl bromide, aluminum hydrate, magnesium hydroxide, decabromobiphenyl ether, trichlorotetrabromotoluene, pentabromophenylbenzoate, pentabromoethyl benzene, the 9253, 9406, 9371, and 9376 flame retardants sold by Pelron Corp., the last two being non-reactive organophosphorus chlorine type retardants, tris(monochloropropyl)phosphate, dibromobutene diol, ®Dechlorane Plus 515, 25, and 2520 cycloaliphatic flame retardants sold by the Hooker Chemical Co., ®Bromoklor 50 and 70 bromine-chlorine flame retardant sold by the Keil Chemical Division, of Ferro Corp., ®Antiblaze 19, flame retardant reputed to be

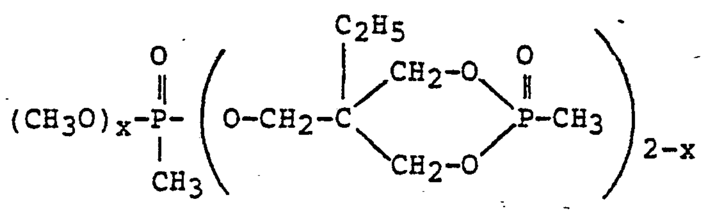

where x=0 or 1 ,

Antiblaze 78 flame retardant reputed to be

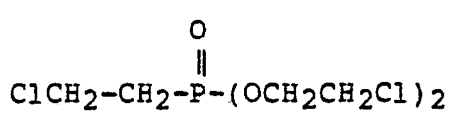

,

molybdenum trioxide, ®Phosgard 2XC-20 flame retardant reputed to be:

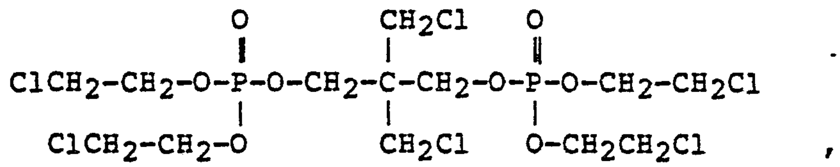

and Phosgard C-22-R flame retardant reputed to be

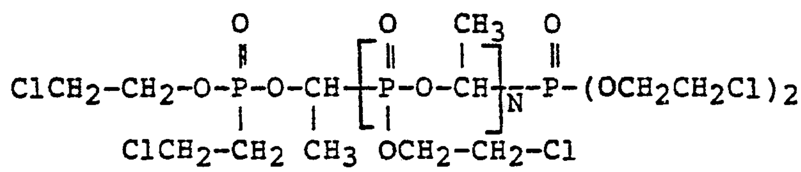

®Thermolin 101 - tetrakis(2-chloroethyl)ethylene diphosphate; ®Fyarestor 525 and ®Pearsall ID 28-61, reactive phosphorus-halogen compounds sold by Pearsall Chemical Corp.; Fyarestor 100, halogenated organic compound sold by Pearsall; ®SAYTEX 105, aromatic bromine compound, BCL-462, dibromoethyldibromocyclohexane and BN-451, aliphatic bromine compound sold by Saytech Inc., tris(2-chloroethyl)phosphate, tris(beta-chloropropyl)phosphate, tris(dichloropropyl)phosphate, tris(2,3-dibromopropyl)phosphate; ®Fyrol 99 - chlorinated oligomeric phosphate ester, Fyrol A - mixed halogenated phosphate ester and Fyrol 76 - polycondensed vinyl phosphonate sold by Stauffer Chemical Company; N,N-bis(2-hydroxyethyl)aminomethylphosphonate, dimethylmethylphosphonate, bis(2-chloroethyl)vinyl phosphonate; ®Wiltrol HRF - polymeric phosphite, sold by Stepan Chemical Corp.; ®Firemaster 680 - brominated compound sold by Velsicol Chemical Corp.; and hexabromocyclododecane.

In addition to the previously described ingredients, other ingredients such as catalysts, surfactants, dyes, fillers, pigments and the like can be included in the preparation of the foams.

Surfactants which can be used are the conventional surfactants used in urethane preparation such as the polysiloxanes or the alkylene oxide adducts of organic compounds containing reactive hydrogen atoms such as the ethylene oxide adducts of alcohols, glycols and phenols. Generally, the surfactants are employed in amounts ranging from about 0.01 part to 5 parts by weight per 100 parts of polyol.

Conventional fillers for use herein include, for example, aluminum silicate, calcium silicate, magnesium silicate, calcium carbonate, barium sulfate, calcium sulfate, glass fibers, carbon black and silica. The filler, if used, is normally present in an amount ranging from about 5 parts to 100 parts by weight per 100 parts of polyol.

A pigment which can be used herein can be any conventional pigment heretofor disclosed in the art such as titanium dioxide, zinc oxide, iron oxide, antimony oxide, chrome green, chrome yellow, iron blue siennas, molybdate oranges and organic pigments such as para reds, benzidine yellow, toluidine red, toners and phthalocyanines.

Any of the catalysts employed in the preparation of polyurethane foam can be employed in the subject invention. Representative of these catalysts include the amine catalysts

such as diethylenetriamine, ketimine, triethylenediamine, tetramethylenediamine, tetramethylguanidine, trimethylpiperazine and the metalo-organic salt catalysts which are polyvalent metal salts of an organic acid having up to about 18 carbon atoms and being void of active hydrogen atoms. The organo portion of the salt may be either linear or cyclic or saturated or unsaturated. Generally, the polyvalent metal has a valence from about 2 to 4. Typical of these salts include: stannous acetate, stannous butyrate, stannous 2-ethylhexoate, stannous laurate, stannous oleate, stannous stearate, stannous octoate, lead cyclopentanecarboxylate, cadmium cyclohexanecarboxylate, lead naphthenate, lead octoate, cobalt naphthenate, zinc naphthenate, bis(phenylmercury)dodecyl succinate, phenylmercuric benzoate, cadmium naphthenate, dibutyltin dilaurate and dibutyltin-di-2-ethylhexoate. Generally, these catalysts will be employed in amounts ranging from about 0.01 part to 1.0 part by weight based on 100 parts by weight of the polyol. Preferred amounts of tin catalysts are 0.01 to 0.35 part by weight based on 100 parts by weight of the polyol while preferred amounts of amine catalysts are 0.05 to 0.60 part by weight based on 100 parts by weight of the polyol.

In preparing the foams of the present invention, any general procedure conventionally used for the preparation of urethane foams can be practiced. Generally speaking, such procedure entails the mixing together of ingredients with agitation until the foaming reaction commences. After foam formation ceases, the resulting product is then cured at a

temperature ranging from about 25°C to 150°C for about 5 minutes to 24 hours.

Suitable processes for the preparation of cellular polyurethane plastics are disclosed in U.S. Reissue Patent 24,514 together with suitable machinery to be used in conjunction therewith. When water is added as the blowing agent, generally in amount of about 1.0 to 5.5 percent by weight of the polyol, corresponding quantities of excess isocyanate to react with the water and produce carbon dioxide are used. It is also possible to proceed with the preparation of the polyurethane plastics by a prepolymer technique wherein an excess of organic polyisocyanate is reacted in a first step with a polyol, as described above, to prepare a prepolymer having free isocyanate groups which is then reacted in a second step with water to prepare a foam. Alternately, the components may be reacted in a single working step commonly known as the "one-shot" technique of preparing polyurethanes. Furthermore, instead of water, low boiling hydrocarbons such as pentane, hexane, heptane, pentene, and heptene; azo compounds such as azohexahydrobenzodinitrile; halogenated hydrocarbons such as dichlorodifluoromethane, trichlorofluoromethane, dichlorodifluoroethane, vinylidene chloride, and methylene chloride may be used in amount generally not greater than about 30 percent by weight of the polyol as blowing agents.

For more complete understanding of the present invention, reference is made to the following non-limiting examples wherein all parts are by weight unless otherwise noted.

The foams of these examples were prepared in a conventional manner employing a conventional foam machine (North American Urethane M30 machine) employing a high shear mixing head provided with a suitable outlet for pouring the mixture. The mixing head was fed by five separate streams, and Tables I, IV and VII indicate which streams were employed for each component. Stream I was maintained at 75°F and stream V was maintained at 72°F. The remaining streams were maintained at ambient temperature. The speed of the high shear mixing head was maintained at 3000 rpm. The mixture from the mixing head was poured at output rates of 5 to 7 kilograms per minute into plastic lined boxes 20 by 40 inches with foam heights varying from 8 to 12 inches. The skin of the freshly-poured foam was cured for 15 minutes in an oven set at 250°F. The foams were allowed to cure under ambient conditions at least a week before they were tested.

In the examples, the following expressions are employed.

POLYOL A - A heteric glycerine initiated, propylene oxide, ethylene oxide adduct having a hydroxyl number of 58 and an ethylene oxide content of 6 percent by weight.

®DABCO 33LV - 33 percent solution of triethylene diamine in dipropylene glycol, a product of Air Products Inc.

®NIAX A-1 - 70/30 blend of bis(2-dimethylaminoethyl)ether and dipropylene glycol, a product of Union Carbide Corp.

SS - A non-hydrolyzable silicone surfactant.

T-9 - Stabilized stannous octoate manufactured by M&T Chemical Corp.

TDI - A mixture of 2,4- and 2,6-toluene diisocyanate, (80/20 by weight).

BDO - 1,4-butanediol.

EG - Ethylene glycol (1,2-ethanediol).

PBW - Parts by weight.

FR - Flame retardant.

T-101 - THERMOLIN 101 - tetrakis(2-chloroethyl) ethylene diphosphate.

HBCD - Hexabromocyclododecane.

BC-50 - BROMOCHLOR 50 - aliphatic alkyl halide (Br+Cl).

The word "index" preceded by a three digit number in parentheses after TDI indicates the ratio of the actual amount of isocyanate used in a formulation to the theoretical amount required to react one NCO group with one OH group wherein the value of the theoretical amount is 100.

The physical properties of the polyurethane foams prepared in the following examples were determined in accordance with ASTM D-3574-77. In connection with the physical properties, the following abbreviations were employed.

IFD - Indentation force deflection.

CLD - Compression load deflection.

Examples 1-15

Foams were prepared for the 15 examples having compositions indicated in Table I in parts by weight using the procedure set forth above. In Table I, the 3/1 DABCO 33LV/NIAX A-1 is a 3 to 1 weight ratio blend of DABCO 33LV solution with NIAX A-1. All foams were tested for physical properties and the average physical property data is provided in Table II below.

Each of the foams was aged one hour and the tensile strength, 25 percent IFD, 65 percent IFD, and 25 percent return were measured after such aging at 400°F. Twenty-five percent IFD was also measured after aging of the samples at 400°F for three hours. The results are shown in Table III wherein a minus (-) indicates a property loss. As can be seen from Table III, at the higher percentages of 1,4-butanediol, the property loss after heat aging was superior to the property loss of the control samples containing no 1,4-butanediol. It should be noted that after three hours of heat aging, two of the control samples caught fire and could not be tested.

## TABLE I

| Example Number<br>Formulation, PBW | Stream | 1 | 2 | 3 | 4 | 5 | 6 | 7 | 8 |
|---|---|---|---|---|---|---|---|---|---|
| Polyol A | I | 100 | 100 | 100 | 100 | 100 | 100 | 100 | 100 |
| 1,4-Butanediol | I | --- | --- | --- | 0.5 | 0.5 | 0.5 | 1.0 | 1.0 |
| Water (total) | II | 3.6 | 3.6 | 3.6 | 3.6 | 3.6 | 3.6 | 3.6 | 3.6 |
| SS | III | 0.90 | 0.90 | 0.90 | 0.90 | 0.90 | 0.90 | 0.90 | 0.90 |
| 3/1 DABCO 33LV/ NIAX A-1 | II | 0.24 | 0.24 | 0.24 | 0.24 | 0.24 | 0.24 | 0.24 | 0.24 |
| T-9 | IV | 0.20 | 0.25 | 0.30 | 0.15 | 0.20 | 0.25 | 0.10 | 0.15 |
| TDI (105 Index) | V | 45.9 | 45.9 | 45.9 | 47.0 | 47.0 | 47.0 | 48.0 | 48.0 |

| Example Number<br>Formulation, PBW | Stream | 9 | 10 | 11 | 12 | 13 | 14 | 15 |
|---|---|---|---|---|---|---|---|---|
| Polyol A | I | 100 | 100 | 100 | 100 | 100 | 100 | 100 |
| 1,4-Butanediol | I | 1.0 | 2.0 | 2.0 | 2.0 | 3.0 | 3.0 | 3.0 |
| Water (total) | II | 3.6 | 3.6 | 3.6 | 3.6 | 3.6 | 3.6 | 3.6 |
| SS | III | 0.90 | 0.90 | 0.90 | 0.90 | 0.90 | 0.90 | 0.90 |
| 3/1 DABCO 33LV/ NIAX A-1 | II | 0.24 | 0.24 | 0.24 | 0.24 | 0.24 | 0.24 | 0.24 |
| T-9 | IV | 0.20 | 0.10 | 0.15 | 0.20 | 0.05 | 0.10 | 0.15 |
| TDI (105 Index) | V | 48.0 | 50.0 | 50.0 | 50.0 | 52.0 | 52.0 | 52.0 |

TABLE II

| Example Number | 1 | 2 | 3 | 4 | 5 | 6 | 7 | 8 |
|---|---|---|---|---|---|---|---|---|
| **Foam Properties** | | | | | | | | |
| Density, pcf. | 1.74 | 1.69 | 1.64 | 1.73 | 1.73 | 1.63 | 1.73 | 1.83 |
| Tensile strength, psi. | 20.7 | 20.0 | 20.2 | 17.3 | 18.3 | 21.5 | 13.4 | 13.4 |
| Elongation, % | 237 | 300 | 280 | 310 | 317 | 340 | 213 | 297 |
| Tear, pi. | 3.3 | 3.3 | 3.5 | 3.4 | 3.2 | 3.2 | 2.9 | 2.9 |
| Resilience, % | 53 | 45 | 36 | 46 | 44 | 32 | 47 | 44 |
| IFD, lb./50 sq. in. (4 in.) 25% | 36.3 | 39.9 | 40.0 | 28.0 | 31.9 | 32.2 | 27.0 | 24.0 |
| 65% | 70.8 | 72.7 | 73.4 | 54.8 | 62.8 | 69.0 | 58.5 | 54.2 |
| 25% return | 28.0 | 28.2 | 26.4 | 20.0 | 23.0 | 20.0 | 20.0 | 17.0 |
| Sag factor | 1.95 | 1.82 | 1.83 | 1.96 | 1.97 | 2.14 | 2.17 | 2.26 |
| Guide factor | 20.9 | 23.6 | 24.3 | 16.2 | 18.4 | 19.7 | 15.6 | 13.1 |
| Recovery, % | 77.1 | 70.7 | 66.0 | 71.2 | 72.1 | 62.1 | 74.1 | 70.8 |
| Compression set, %-50% | 5.8 | 7.1 | 10 | 6.0 | 7.5 | 15 | 6.4 | 6.7 |
| -90% | 8.2 | 23 | 19 | 25 | 24 | 26 | 13 | 26 |
| Humid aged 5 hrs. at 250°F CLD, % or original 50% | 85 | 89 | 89 | 80 | 86 | 81 | 79 | 83 |
| Compression set, %-50% | 7.1 | 7.3 | 9.3 | 7.8 | 8.1 | 13 | 6.6 | 11 |
| -90% | 8.5 | 12 | 13 | 9.0 | 13 | 18 | 14 | 15 |
| Heat aged 22 hrs. at 284°F Tensile strength % of original | 89 | 97 | 99 | 97 | 93 | 79 | 103 | 106 |
| Static fatigue, % loss 1 lb. height | 2.5 | 2.5 | 3.9 | 2.5 | 2.5 | 3:0 | 2.4 | 2.5 |
| 25% IFD | 18.8 | 18.1 | 21.8 | 25.3 | 26.6 | 28.0 | 23 | 21 |
| Air flow, cfm. | 3.9 | 2.1 | 0.76 | 4.80 | 3.20 | 0.85 | 6.07 | 3.70 |

TABLE II (Continued)

| Example Number | 9 | 10 | 11 | 12 | 13 | 14 | 15 |
|---|---|---|---|---|---|---|---|
| Foam Properties | | | | | | | |
| Density, pcf. | 1.67 | 1.89 | 1.71 | 1.39 | 1.96 | 1.70 | 1.63 |
| Tensile strength, psi. | 17.5 | 20.7 | 21.1 | 20.6 | 18.4 | 15.8 | 14.8 |
| Elongation, % | 270 | 237 | 320 | 287 | 203 | 213 | 217 |
| Tear, pi. | 3.4 | 3.2 | 3.4 | 3.4 | 2.7 | 3.0 | 3.1 |
| Resilience, % | 36 | 47 | 43 | 26 | 47 | 37 | 18 |
| IFD, lb./50 sq. in. (4 in.) 25% | 37.3 | 36.4 | 37.4 | 36.4 | 30.0 | 39.2 | 37.8 |
| 65% | 76.9 | 80.0 | 73.4 | 72.8 | 78.0 | 82.6 | 82.4 |
| 25% return | 26.7 | 27.0 | 26.0 | 23.4 | 22.2 | 26.0 | 23.2 |
| Sag factor | 2.06 | 2.20 | 1.96 | 2.00 | 2.60 | 2.11 | 2.18 |
| Guide factor | 22.3 | 19.3 | 21.9 | 26.2 | 15.3 | 23.0 | 23.2 |
| Recovery, % | 71.6 | 74.2 | 69.5 | 64.3 | 74.0 | 66.3 | 61.4 |
| Compression set, %-50% | 12 | 8.2 | 9.8 | 16 | 16 | 15 | 16 |
| -90% | 26 | 22 | 27 | 26 | 28 | 26 | 28 |
| Humid aged 5 hrs. at 250°F CLD, % or original 50% | 85 | 82 | 82 | 82 | 72 | 77 | 76 |
| Compression set, %-50% | 12 | 12 | 11 | 14 | 22 | 21 | 22 |
| -90% | 21 | 17 | 20 | 22 | 49 | 37 | 32 |
| Heat aged 22 hrs. at 284°F Tensile strength % of original | 98 | 95 | 90 | 96 | 112 | 99 | 101 |
| Static fatigue, % loss 1 lb. height | 2.0 | 3 | 3 | 3 | 4.7 | 3.4 | 3.0 |
| 25% IFD | 23 | 18 | 19 | 24 | 29.3 | 25.7 | 26.7 |
| Air flow, cfm. | 1.35 | 3.2 | 2.40 | 0.76 | 2.67 | 0.67 | 0.17 |

TABLE III

1,4-Butanediol-Containing Slab Stock Foam: 400°F Heat Aged Properties

| Example Number | BDO, pbw. | Tensile Strength Orig-inal | Tensile Strength Aged 1 hr. | Tensile Strength % Change | 25% IFD Orig-inal | 25% IFD Aged 1 hr. | 25% IFD % Change | 65% IFD Orig-inal | 65% IFD Aged 1 hr. | 65% IFD % Change | 25% Return Orig-inal | 25% Return Aged 1 hr. | 25% Return % Change | 25% IFD Orig-inal | 25% IFD Aged 3 hr. | 25% IFD % Change |
|---|---|---|---|---|---|---|---|---|---|---|---|---|---|---|---|---|
| 1 | 0 | 20.7 | 16.3 | -21 | 36.3 | 24.3 | -33 | 70.8 | 52.0 | -27 | 28.0 | 17.8 | -36 | 36.3 | smolder | --- |
| 2 | 0 | 20.0 | 17.1 | -14 | 39.9 | 34.8 | -13 | 72.7 | 65.2 | -10 | 28.2 | 24.3 | -14 | 39.9 | smolder | --- |
| 3 | 0 | 20.2 | 16.6 | -17 | 40.0 | 34.2 | -14 | 73.4 | 66.8 | - 9 | 26.4 | 23.2 | -12 | 40.0 | 21.4 | -46.5 |
| 4 | 0.5 | 17.3 | 16.3 | -5.8 | 28.0 | 24.1 | -14 | 54.8 | 48.9 | -11 | 20.0 | 17.4 | -13 | 28.0 | 18.4 | -34 |
| 5 | 0.5 | 18.3 | 15.6 | -14 | 31.9 | 23.0 | -30 | 62.8 | 48.4 | -23 | 23.0 | 16.3 | -29 | 31.9 | 19.2 | -40 |
| 6 | 0.5 | 21.5 | 15.9 | -26 | 32.2 | 28.6 | -11 | 69.0 | 58.3 | -15 | 20.0 | 19.0 | - 5 | 32.2 | 20.7 | -36 |
| 7 | 1.0 | 13.4 | 13.6 | + 1.4 | 27.0 | 21.0 | -22 | 58.5 | 46.0 | -21 | 20.0 | 15.3 | -23 | 27.0 | 16.0 | -41 |
| 8 | 1.0 | 13.4 | 15.0 | +12 | 24.0 | 18.2 | -24 | 54.2 | 43.0 | -20 | 17.0 | 12.8 | -24 | 24.0 | 12.9 | -46 |
| 9 | 1.0 | 17.5 | 15.9 | - 9.3 | 37.3 | 31.3 | -16 | 76.9 | 65.0 | -15 | 26.7 | 21.2 | -21 | 37.3 | 21.4 | -43 |
| 10 | 2.0 | 20.7 | 22.2 | + 7.1 | 36.4 | 32.5 | -11 | 80.0 | 72.1 | -10 | 27.0 | 24.0 | -11 | 36.4 | 27.6 | -24 |
| 11 | 2.0 | 21.1 | 19.8 | - 3.8 | 37.4 | 28.0 | -25 | 73.4 | 60.8 | -17 | 26.0 | 19.9 | -23 | 37.4 | 23.5 | -37 |
| 12 | 2.0 | 20.6 | 20.1 | - 2.4 | 36.4 | 32.5 | -11 | 72.8 | 65.0 | -10 | 23.4 | 21.3 | - 9 | 36.4 | 22.7 | -38 |
| 13 | 3.0 | 18.4 | 20.1 | + 9.0 | 30.0 | 29.1 | - 3.0 | 78.0 | 75.7 | - 3 | 22.0 | 21.2 | + 4 | 30.0 | 25.0 | -34 |
| 14 | 3.0 | 15.8 | 16.1 | + 1.9 | 39.2 | 37.0 | - 5.6 | 82.6 | 77.0 | - 6 | 26.0 | 24.8 | - 5 | 39.2 | 28.4 | -28 |
| 15 | 3.0 | 14.8 | 14.6 | - 1.1 | 37.8 | 33.2 | -12.0 | 82.4 | 73.8 | -10 | 23.2 | 20.8 | -10 | 37.8 | 26.8 | -11 |

EXAMPLES 16-23

The following examples, shown in Tables IV, V and VI, illustrate the effect of 1,4-butanediol on high density foams. Foams were prepared using 1,4-butanediol in varying amounts from 0.5 to 3.0 parts by weight along with foams containing no 1,4-butanediol for comparison using the procedure given above.

The formulation, in parts by weight, and average physical property data are given in Table IV below. The high density foams of Table IV were submitted to one, two and three hour heat aging treatments at 400°F, and the tensile strengths and CLD were determined, the results of which are shown in Table V below. Percentages of change for tensile strength and 50% CLD were calculated from the data in Table V and are presented in Table VI below wherein negative signs indicate a degradation of foam properties. It will be noted from Table VI that, after one hour of heat aging, the control foams exhibit both increases and decreases in tensile strength, but that the 1,4-butanediol-containing foams exhibit large increases or slight decreases in tensile strength. The control foams have a minimum CLD loss of 30 percent but the 1,4-butanediol-containing foams have a maximum CLD loss of only 15 percent. After three hours of heat aging, the control foams lost between 8.8 and 44 percent of their tensile strength but the 1,4-butanediol-containing foams lost at most 17 percent of their tensile strength. At the end of three hours aging, half of the control foams melted and they obviously could not be tested. After three hours, samples from Examples 17 and 21

melted slightly at the surface but could still be tested. The remaining control foams lost between 42 and 61 percent in load bearing. After three hours of heat aging, the 1,4-butanediol-containing foams have less reduction in CLD than the control foams have after one hour heat aging. The above tests demonstrate that 1,4-butanediol dramatically improves the thermal stability of polyurethane foams at temperatures of 400°F.

TABLE IV

(*partial collapse)

| Example Number Formulation, PBW. | Stream | 16 | 17 | 18 | 19 | 20 | 21 | 22 | 23* |
|---|---|---|---|---|---|---|---|---|---|
| Polyol A | I | 100 | 100 | 100 | 100 | 100 | 100 | 100 | 100 |
| 1,4-Butanediol | I | -- | -- | -- | -- | 3.0 | 3.0 | 3.0 | 3.0 |
| Water (total) | II | 1.4 | 1.4 | 1.4 | 1.4 | 1.4 | 1.4 | 1.4 | 1.4 |
| SS | III | 0.6 | 0.6 | 0.6 | 0.6 | 0.4 | 0.4 | 0.4 | 0.4 |
| NIAX A-1 | II | 0.24 | 0.24 | 0.24 | 0.24 | 0.24 | 0.24 | 0.24 | 0.24 |
| T-9 | IV | 0.15 | 0.13 | 0.10 | 0.07 | 0.04 | 0.035 | 0.03 | 0.025 |
| TDI (105 Index) | V | 23.5 | 23.5 | 23.5 | 23.5 | 29.7 | 29.7 | 29.7 | 29.7 |
| Dimethylaminoethanol | II | -- | -- | -- | -- | 0.3 | 0.3 | 0.3 | 0.3 |

TABLE IV (Continued) (*partial collapse)

| Example Number | 16 | 17 | 18 | 19 | 20 | 21 | 22 | 23* |
|---|---|---|---|---|---|---|---|---|
| **Foam Properties** | | | | | | | | |
| Density, pcf. | 3.62 | 3.63 | 3.81 | 4.06 | 4.61 | 4.69 | 4.64 | 4.37 |
| Tensile strength, psi. | 9.5 | 9.9 | 9.0 | 9.4 | 7.8 | 11.0 | 10.2 | 10.5 |
| Elongation, % | 167 | 160 | 140 | 143 | 140 | 140 | 167 | 167 |
| Tear, pi. | 1.3 | 1.5 | 1.2 | 1.0 | 1.8 | 1.4 | 1.3 | 1.8 |
| Resilience, % | 62 | 60 | 66 | 62 | 42 | 42 | 48 | 44 |
| IFD, lb./50 sq. in. (4 in.) 25% | 30.5 | 35.4 | 34.7 | 33.8 | 29.7 | 32.9 | 29.3 | 26.7 |
| 65% | 72.4 | 76.2 | 80.3 | 91.1 | 98.5 | 107.2 | 97.3 | 91.5 |
| 25% return | 26.6 | 31.0 | 30.5 | 29.3 | 26.3 | 29.1 | 25.6 | 23.2 |
| Sag factor | 2.37 | 2.15 | 2.31 | 2.70 | 3.32 | 3.26 | 3.32 | 3.43 |
| Guide factor | 8.4 | 9.8 | 9.1 | 8.3 | 6.4 | 7.0 | 6.3 | 6.1 |
| Recovery, % | 87.2 | 87.6 | 87.9 | 86.7 | 88.6 | 88.4 | 87.4 | 86.9 |
| Compression set, %-50% | 4.7 | 2.4 | 4.0 | 5.0 | 6.2 | 10 | 8.3 | 5.7 |
| -90% | 7.4 | 5.7 | 4.7 | 3.4 | 11 | 9.6 | 7.5 | 6.4 |
| Humid aged 5 hrs. at 250°F CLD, % or original 50% | 61 | 62 | 63 | 63 | 48 | 51 | 49 | 49 |
| Compression set, %-50% | 6.7 | 5.5 | 4.9 | 6.1 | 12 | 24 | 18 | 12 |
| -90% | 80 | 46 | 16 | 14 | 88 | 80 | 90 | 88 |
| Air flow, cfm. | 2.37 | 2.20 | 2.66 | 2.43 | 2.37 | 0.65 | 1.80 | 3.0[illegible] |

TABLE V

1,4-Butanediol in Foam, Heat Aged for 1, 2 and 3 hours at 400°F

| Example Number | BDO, pbw. | Tensile Strength Orig. | Tensile Strength 1 hr. | Tensile Strength 2 hr. | Tensile Strength 3 hr. | 50% CLD Orig. | 50% CLD 1 hr. | 50% CLD Orig. | 50% CLD 2 hr. | 50% CLD Orig. | 50% CLD 3 hr. |
|---|---|---|---|---|---|---|---|---|---|---|---|
| 16 | 0 | 9.5 | 8.8 | 9.3 | 7.7 | 0.544 | 0.380 | 0.552 | 0.336 | 0.529 | Melted |
| 17 | 0 | 9.9 | 10.1 | 9.9 | 7.8 | 0.589 | 0.389 | 0.570 | 0.346 | 0.590 | 0.232 |
| 18 | 0 | 9.0 | 10.0 | 9.3 | 8.2 | 0.603 | 0.403 | 0.612 | 0.356 | 0.603 | Melted |
| 19 | 0 | 9.4 | 8.3 | 7.5 | 5.3 | 0.636 | 0.360 | 0.625 | 0.409 | 0.686 | 0.399 |
| 20 | 3 | 7.8 | 10.6 | 10.9 | 9.7 | 0.545 | 0.504 | 0.535 | 0.499 | 0.527 | 0.473 |
| 21 | 3 | 11.0 | 13.8 | 15.8 | 15.9 | 0.745 | 0.776 | 0.793 | 0.623 | 0.745 | 0.562 |
| 22 | 3 | 10.2 | 11.7 | 12.0 | 9.3 | 0.625 | 0.532 | 0.634 | 0.480 | 0.646 | 0.534 |
| 23 | 3 | 10.5 | 10.1 | 10.5 | 8.7 | 0.556 | 0.495 | 0.546 | 0.477 | 0.546 | 0.405 |

TABLE VI

1,4-Butanediol in Foam: Percent Property Change with Heat Age (400°F)

| Example Number | BDO, pbw. | Percent Change In: Tensile Strength 1 hr. | Tensile Strength 2 hr. | Tensile Strength 3 hr. | 50% CLD 1 hr. | 50% CLD 2 hr. | 50% CLD 3 hr. |
|---|---|---|---|---|---|---|---|
| 16 | 0 | - 7.4 | - 2.1 | -19 | -30 | -39 | Melt |
| 17 | 0 | 2.0 | 0.0 | -21 | -34 | -39 | -61 |
| 18 | 0 | 11 | 3.0 | - 8.8 | -33 | -42 | Melt |
| 19 | 0 | -12 | -20 | -44 | -43 | -34 | -42 |
| 20 | 3 | 35 | 40 | 24 | - 8 | -16 | -10 |
| 21 | 3 | 25 | 43 | 44 | 4 | -21 | -25 |
| 22 | 3 | 15 | 18 | - 8.8 | -15 | -24 | -17 |
| 23 | 3 | - 3.8 | 0 | -17 | -11 | -13 | -26 |

Examples 24-42

Foams were prepared for these examples having compositions indicated in Table VII below in parts by weight using the procedure set forth above.

Table VII

| Formulation | Stream | Parts by Weight |
|---|---|---|
| Polyol A | I | 100 |
| Diol | I | See Table VIII |
| Water | II | 3.2 |
| SS | III | 0.90 |
| DABCO 33LV | II | 0.18 |
| NIAX A-1 | II | 0.06 |
| T-9 | IV | See Table VIII |
| TDI (Index) | V | 105* |
| Flame Retardant | I | See Table VIII |

* This is TDI index, not parts by weight.

Each of the foams was aged three hours at 400°F and the 25 percent IFD and 65 percent IFD measured. The results are shown in Table VIII wherein it can be seen that, with the examples incorporating 1,4-butanediol and ethylene glycol, the property loss after heat aging was superior to the property loss of the control samples containing no alkanediol. It should be noted that the examples incorporating the fire retardant were as good or better than diol-containing examples which did not incorporate the fire retardant. In Table VIII below, the word "tight" means the foams had a high number of closed cells and the word "split" means the foam did not gel

rapidly enough to prevent the gasses being evolved during the reaction from tearing the foam. Such tears are referred to as splits.

Table VIII

Effect of Low Molecular Weight Diols on the Thermal Stability of Slab Stock Foams

| Example | Diol | Diol, pbw | FR | FR, pbw | T-9, pbw | % IFD Loss After 400°F-3 Hr. Heat Age 25% IFD | % IFD Loss After 400°F-3 Hr. Heat Age 65% IFD |
|---|---|---|---|---|---|---|---|
| 24 | BDO | 3.0 | --- | --- | 0.05 | 35. | 28. |
| 25 | BDO | 3.0 | --- | --- | 0.10 | 40. | 32. |
| 26 | BDO | 3.0 | --- | --- | 0.15 | 44. | 36. |
| 27 | None | --- | --- | --- | 0.20 | 52. | 49. |
| 28 | None | --- | --- | --- | 0.25 | 62. | 56. |
| 29 | None | --- | --- | --- | 0.30 | 52. | 48. |
| 30 | EG | 2.0 | --- | --- | 0.20 | Tight | Tight |
| 31 | EG | 2.0 | --- | --- | 0.10 | 48. | 38. |
| 32 | EG | 2.0 | --- | --- | 0.05 | 27. | 21. |
| 33 | BDO | 3.0 | T-101 | 2.0 | 0.05 | 27. | 23. |
| 34 | BDO | 3.0 | T-101 | 2.0 | 0.10 | 49. | 36. |

Table VIII (Continued)

Effect of Low Molecular Weight Diols on the Thermal Stability of Slab Stock Foams

| Example | Diol | Diol, pbw | FR | FR, pbw | T-9, pbw | % IFD Loss After 400°F-3 Hr. Heat Age 25% IFD | 65% IFD |
|---|---|---|---|---|---|---|---|
| 35 | BDO | 3.0 | T-101 | 2.0 | 0.15 | 45. | 36. |
| 36 | BDO | 3.0 | HBCD | 2.0 | 0.05 | 20. | 14. |
| 37 | BDO | 3.0 | HBCD | 2.0 | 0.10 | 39. | 29. |
| 38 | BDO | 3.0 | HBCD | 2.0 | 0.15 | 40. | 30. |
| 39 | BDO | 3.0 | BC-50 | 2.0 | 0.05 | Split | Split |
| 40 | BDO | 3.0 | BC-50 | 2.0 | 0.10 | 27. | 18. |
| 41 | BDO | 3.0 | BC-50 | 2.0 | 0.15 | 30. | 17. |
| 42 | BDO | 3.0 | BC-50 | 2.0 | 0.20 | 46. | 27. |

What is claimed is:

1. The method for decreasing high temperature degradation of polyurethane foams prepared from the reaction of an organic polyol having a hydroxyl functionality of at least two with an organic polyisocyanate in the presence of a blowing agent, comprising incorporating with the reactants a small but effective amount of a lower alkanediol.

2. The method claim 1 wherein a flame-retardant additive is also incorporated with the reactants.

3. The method of claim 1 wherein said alkanediol contains 2 to about 5 carbon atoms.

4. The method of claim 3 wherein a flame-retardant additive is also incorporated with said reactants.

5. The method of claim 3 wherein the amount of said lower alkanediol is from about 0.5 to 5 percent by weight of the polyol.

6. The method of claim 5 wherein a flame-retardant additive is also incorporated with said reactants in amount of not more than about 20 percent by weight of the reactants.

7. The method of claim 5 wherein said alkanediol is 1,4-butanediol.

8. The method of claim 5 wherein said alkanediol is ethylene glycol.

9. The method of claim 5 wherein said organic polyol has an average equivalent weight of from about 500 to 2000.

10. The method of claim 9 wherein a flame-retardant additive is also incorporated with said reactants in an amount not greater than 20 percent by weight of the reactants.

11. The method of claim 10 wherein said flame-retardant additive is tetrakis(2-chloroethyl)ethylene diphosphate.

12. The method of claim 10 wherein said flame-retardant additive is hexabromocyclododecane.

13. The method of claim 10 wherein said flame-retardant additive is an aliphatic alkyl halide.

14. In a polyurethane foam prepared by the reaction of an organic polyol and an organic polyisocyanate in the presence of a blowing agent, the improvement comprising the inclusion with the reactants of a small but effective amount of lower alkanediol.

15. The polyurethane foam of claim 14 wherein a small but effective amount of flame-retardant additive is also included with the reactants.

16. The polyurethane foam of claim 14 wherein said alkanediol contains 2 to about 5 carbon atoms.

17. The polyurethane foam of claim 16 wherein said reactants also include a small but effective amount of flame-retardant additive.

18. The polyurethane foam of claim 16 wherein the amount of lower alkanediol is about 0.5 to 5 percent by weight of the reactants.

19. The polyurethane foam of claim 18 wherein the reactants include not more than about 20 percent flame-retardant additive by weight of the reactants.

20. The polyurethane foam of claim 18 wherein said lower alkanediol is 1,4-butanediol.

21. The polyurethane foam of claim 18 wherein said lower alkanediol is ethylene glycol.

22. The polyurethane foam of claim 18 wherein said organic polyol has an average equivalent weight of about 500 to 2000.

23. The polyurethane foam of claim 22 wherein said reactants include not more than about 20 percent flame-retardant additive by weight of the reactants.

24. The polyurethane foam of claim 23 wherein said flame-retardant additive is tetrakis(2-chloroethyl)ethylene diphosphate.

25. The polyurethane foam of claim 23 wherein said flame-retardant additive is hexabromocyclododecane.

26. The polyurethane foam of claim 23 wherein said flame-retardant additive is an aliphatic alkyl halide.

0045413

Application number

European Patent Office

# EUROPEAN SEARCH REPORT

EP 81 10 5581.3

## DOCUMENTS CONSIDERED TO BE RELEVANT

| Category | Citation of document with indication, where appropriate, of relevant passages | Relevant to claim |
| --- | --- | --- |
| X | US - A - 4 060 439 (ROSEMUND et al.)<br>* claims 1, 2, 8; column 3, lines 3 to 6; column 9, lines 9 to 11; table 3, examples 7 to 10 *<br>& DE - A - 2 522 552<br>-- | 1-5,7, 8,14-16,18, 21 |
| | GB - A - 1 323 184 (OLIN CORP.)<br>* claims 1, 4; example 6 *<br>-- | 1,3,5, 7,8,14, 16,18, 20,21 |
| | Chemical Abstracts vol. 85, 26 July 1976, Columbus, Ohio, USA<br>J.S., BABIEC, JR., et al. "How to effectively flame retard flexible urethane foams. Tetrakis(2-chloroethyl)ethylene diphosphate"<br>page 28, abstract no. 22215f<br>& Fire Retardants: Proc.Int. Symp. 1974, pages 1 to 21<br>-- | 11 |
| A | DE - A1 - 2 731 012 (MONTEDISON)<br>* claims 1, 3, 7; page 3, lines 6 to 12 and lines 24 to 28; page 5, lines 1 to 5 *<br>---- | |

CLASSIFICATION OF THE APPLICATION (Int. Cl.3)

C 08 G 18/32
C 08 G 18/66
C 08 K 5/52
C 08 K 5/02

TECHNICAL FIELDS SEARCHED (Int. Cl.3)

C 08 G 18/00
C 08 K 5/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
| --- | --- | --- |
| Berlin | 02-11-1981 | MARX |

EPO Form 1503.1 06.78